# EUROPEAN PATENT SPECIFICATION

(11) **EP 3 483 213 B1**
(45) Date of publication and mention of the grant of the patent: **07.04.2021**
(21) Application number: 17824080.0
(22) Date of filing: 27.06.2017
(51) Int. Cl.: C08L 33/06, C08K 3/04, C09K 3/00, C09K 3/10, F16L 11/04

(54) **ACRYLIC RUBBER COMPOSITION**
ACRLYKAUTSCHUKZUSAMMENSETZUNG
COMPOSITION DE CAOUTCHOUC ACRYLIQUE

(30) Priority: 05.07.2016 JP 2016133546
(43) Date of publication of application: 15.05.2019
(73) Proprietor: Denka Company Limited, Tokyo 103-8338 (JP); Indian Institute Of Technology, Kharagpur, West Bengal, Kharagpur 721302 (IN)
(72) Inventor: NAKANO Tatsuya, Ichihara-city Chiba 290-8588 (JP); KAWASAKI Takashi, Ichihara-city Chiba 290-8588 (JP); MIYAUCHI Toshiaki, Ichihara-city Chiba 290-8588 (JP); HORIGUCHI Tatsunori, Ichihara-city Chiba 290-8588 (JP); SAHA Tuhin, Kharagpur 721302 (IN); BHOWMICK, Anil K., Kharagpur 721302 (IN)
(74) Representative: Forrest, Stuart
(86) International application number: PCT/JP2017/023571
(87) International publication number: WO 2018/008474

(56) References cited:
- WO-A1-2011/162004
- CN-A- 104 130 541
- CN-A- 105 949 697
- JP-A- 2011 006 509
- JP-A- 2012 211 239
- JP-A- 2013 079 348
- US-A1- 2011 114 897
- DATABASE WPI Week 201705 Thomson Scientific, London, GB; AN 2016-608652 XP002796478, & CN 105 949 707 A (NINGGUO FEIYING AUTO PARTS CO LTD) 21 September 2016 (2016-09-21)

## Description

### Technical Field

The present invention relates to an acrylic rubber composition having higher tensile properties and higher heat resistance and use thereof.

### Background Art

To meet recent demands for higher performance and higher functions, attempts to uniformly disperse various fillers in a polymer have been performed to impart various characteristics.

For example, in Patent Document 1, a small amount of aluminum oxide is dispersed as a thermal conductive filler in a silicone resin molded article to impart high thermal conductivity while flexibility is maintained.

Patent Document 2 discloses a resin sealed semiconductor device in which an inorganic filler is added to an epoxy resin to impart insulating properties.

Patent Document 3 discloses a nanocomposite in which a nanosized filler such as a layered clay mineral is dispersed in a diene rubber to improve physical properties including disruptive strength and flexural fatigue resistance.

### Citation List

### Patent Documents

Patent Document 1: JP-A No. 2014-229849
Patent Document 2: JP-A No. 2013-211556
Patent Document 3: JP-A No. 2003-327751

### Summary of the Invention

### Technical Problem

Acrylic rubbers and vulcanizates thereof have excellent physical properties including heat aging resistance, oil resistance, mechanical characteristics, and permanent compression set characteristics and thus are typically used as materials including hose members, sealing members, and rubber vibration isolator members in an automobile engine compartment.

Such members are also required to have more excellent physical properties including tensile properties and heat resistance to meet recent demands including emission controls and higher engine power.

In view of the above circumstances, the present invention is mainly intended to provide an acrylic rubber composition having more excellent tensile properties and heat resistance. The present invention is also intended to provide a cured rubber produced by curing the acrylic rubber composition.

### Solution to Problem

As a result of intensive studies to solve the above problems, the inventors of the present invention have found that by adding a carbon material comprising graphene oxide to an acrylic rubber, specifically by finely dispersing the carbon material on the nanosize level, tensile properties and heat resistance can be improved, and have completed the present invention.

The present invention provides an acrylic rubber composition comprising 0.1 to 50 parts by mass of a carbon material comprising graphene oxide, relative to 100 parts by mass of an acrylic rubber. The acrylic rubber may be curable or may be a vulcanizable rubber. The acrylic rubber includes at least one functional group selected from an epoxy group, a carboxyl group, and an active chlorine group. The content ratio of a monomer unit having the functional group may be 0.1 to 10% by mass relative to the total mass of the acrylic rubber. The acrylic rubber may comprise an ethylene monomer unit. The content ratio of the ethylene monomer unit may be 0.1 to 10% by mass relative to the total mass of the acrylic rubber. The carbon material may be graphene oxide.

The present invention also provides a vulcanizate of the acrylic rubber composition. In other words, the present invention also provides a vulcanized rubber produced by vulcanization of the acrylic rubber composition.

The present invention further provides a rubber hose comprising the vulcanizate, a sealing part comprising the vulcanizate, and a rubber vibration isolator comprising the vulcanizate.

### Advantageous Effects of Invention

According to the present invention, an acrylic rubber composition having more excellent tensile properties and/or heat resistance can be provided.

### Description of Embodiments

The present invention will now be described in detail, but the invention is not intended to be limited to the following embodiments.

An acrylic rubber composition of the present invention comprises a carbon material including graphene oxide, and may specifically comprise the carbon material dispersed on a nano-level. In other words, the acrylic rubber composition of the present invention may comprise the carbon material in nano sizes in a dispersion state.

The acrylic rubber composition of the present invention may be produced by kneading an acrylic rubber and the carbon material, for example, using a commonly used rubber kneader. Examples of the rubber kneader include, but are not necessarily limited to, a roller, a kneader, a Banbury mixer, an internal mixer, and a twin-screw extruder. Alternatively, the acrylic rubber composition of the present invention may also be produced by, for example, emulsion polymerization of an acrylic rubber in a polymerization liquid containing the carbon material.

An acrylic rubber used in the present invention mainly comprises a (meth)acrylic acid alkyl ester and is a copolymer thereof with a curesite monomer. The curesite monomer is a monomer having a functional group to form a curesite (curing point). The acrylic rubber may be an acrylic rubber produced by further copolymerizing ethylene, that is, an ethylene-copolymerized acrylic rubber. The acrylic rubber may also be an acrylic rubber produced by further copolymerizing vinyl acetate or the like with a (meth)acrylic acid alkyl ester as needed; that is, a vinyl acetate-copolymerized acrylic rubber or an ethylene-vinyl acetate-copolymerized acrylic rubber may be used. The acrylic rubber used in the present invention may preferably be an ethylene-vinyl acetate-copolymerized acrylic rubber. "Mainly comprising" means that monomer units derived from the (meth)acrylic acid alkyl ester are contained in a total amount of, for example, 75% by mass to 99% by mass, preferably 80% by mass to 98% by mass, more preferably 85% by mass to 97% by mass, and even more preferably 90% by mass to 96% by mass relative to the total mass of an acrylic rubber.

The (meth)acrylic acid alkyl ester is to be the skeleton of an acrylic rubber. By selecting the type or the mixing ratio thereof, original physical properties or basic properties including cold resistance and oil resistance of a resulting acrylic rubber composition can be adjusted. In the present invention, the (meth)acrylic acid alkyl ester is a synonym for a (meth)acrylate and includes both methacrylic acid alkyl esters (methacrylates) and acrylic acid alkyl esters (acrylates).

In the present invention, examples of the (meth)acrylic acid alkyl ester include, but are not necessarily limited to, (meth)acrylic acid alkyl esters such as methyl (meth)acrylate, ethyl (meth)acrylate, n-propyl (meth)acrylate, n-butyl (meth)acrylate, isobutyl (meth)acrylate, n-pentyl (meth)acrylate, isoamyl (meth)acrylate, n-hexyl (meth)acrylate, 2-methylpentyl (meth)acrylate, n-octyl (meth)acrylate, 2-ethylhexyl (meth)acrylate, n-decyl (meth)acrylate, n-dodecyl (meth)acrylate, and n-octadecyl (meth)acrylate.

As the (meth)acrylic acid alkyl ester in the present invention, acrylic acid alkoxyalkyl esters such as 2-methoxyethyl acrylate, 2-ethoxyethyl acrylate, 2-(n-propoxy)ethyl acrylate, 2-(n-butoxy)ethyl acrylate, 3-methoxypropyl acrylate, 3-ethoxypropyl acrylate, 2-(n-propoxy)propyl acrylate, 2-(n-butoxy)propyl acrylate, and 2-(2-ethoxyethoxy)ethyl acrylate may also be used. These (meth)acrylic acid alkyl esters may be used singly or in combination of two or more of them.

The acrylic rubber used in the present invention may be preferably a polymer of ethyl acrylate and n-butyl acrylate as the (meth)acrylic acid alkyl ester. In other words, the acrylic rubber used in the present invention preferably contains an ethyl acrylate monomer unit and an n-butyl acrylate monomer unit and more preferably contains these monomer units as main components. The acrylic rubber composition of the present invention may contain an ethyl acrylate monomer unit and an n-butyl acrylate monomer unit in a total amount of, for example, 75% by mass to 99% by mass, preferably 80% by mass to 98% by mass, more preferably 85% by mass to 97% by mass, and even more preferably 90% by mass to 96% by mass relative to the total mass of the acrylic rubber.

For example, the acrylic rubber used in the present invention may contain an ethyl acrylate monomer unit, for example, in an amount of 40 to 60% by mass, preferably 42 to 55% by mass, and more preferably 44 to 50% by mass relative to the total mass of the acrylic rubber, and may contain an n-butyl acrylate monomer unit, for example, in an amount of 40 to 60% by mass, preferably 42 to 55% by mass, and more preferably 44 to 50% by mass relative to the total mass of the acrylic rubber. The content ratio of the monomer units is quantitatively determined on the basis of a nuclear magnetic resonance spectrum obtained from an acrylic rubber or an acrylic rubber composition.

By controlling the amounts of the above unsaturated monomers, cold resistance or oil resistance of a resulting acrylic rubber composition or a vulcanizate thereof can be adjusted. For example, when ethyl acrylate and n-butyl acrylate are used to produce an acrylic rubber, an increase in copolymerization proportion of n-butyl acrylate enables an improvement of cold resistance, whereas an increase in copolymerization proportion of ethyl acrylate enables an improvement of oil resistance.

The curesite monomer may be copolymerized with a (meth)acrylic acid alkyl ester as needed to enable the formation of intermolecular crosslinkages through functional groups derived from the curesite monomer. The curesite monomer may be used for adjusting the hardness or elongation characteristics of an acrylic rubber. The curesite monomer essentially has any one functional group of a carboxyl group, an epoxy group, and an active chlorine group. In other words, the acrylic rubber of the present invention is an acrylic rubber having at least one group selected from a carboxyl group, an epoxy group, and an active chlorine group.

Examples of the curesite monomer having a carboxyl group include, but are not necessarily limited to, acrylic acid, methacrylic acid, crotonic acid, 2-pentenoic acid, maleic acid, fumaric acid, itaconic acid, maleic acid monoalkyl esters, fumaric acid monoalkyl esters, monocyclohexyl maleate, monocyclohexyl fumarate, and cinnamic acid. Examples of the curesite monomer having an epoxy group include, but are not necessarily limited to, glycidyl acrylate, glycidyl methacrylate, allyl glycidyl ether, and methallyl glycidyl ether. Examples of the curesite monomer having an active chlorine group include, but are not necessarily limited to, 2-chloroethyl vinyl ether, 2-chloroethyl acrylate, vinylbenzyl chloride, vinyl chloroacetate, and allyl chloroacetate. A single curesite monomer may be used, or a plurality of curesite monomers may be used in combination.

The curesite monomer used in the present invention is preferably a maleic acid monoalkyl ester or a fumaric acid monoalkyl ester, and the carbon number of the monoalkyl group may be, for example, 1 to 8, preferably 2 to 6, and more preferably 3 to 5. The curesite monomer used in the present invention may be more preferably monobutyl maleate. In other words, the acrylic rubber of the present invention may be preferably a carboxyl group-containing acrylic rubber. The carboxyl group may be preferably derived from the maleic acid monoalkyl ester or the fumaric acid monoalkyl ester.

Alternatively, the curesite monomer used in the present invention may be preferably glycidyl acrylate or glycidyl methacrylate. The curesite monomer used in the present invention may be more preferably glycidyl methacrylate. In other words, the acrylic rubber of the present invention may be preferably an epoxy group-containing acrylic rubber. The epoxy group may be preferably derived from the glycidyl acrylate or the glycidyl methacrylate.

The content ratio of the curesite monomer unit in the acrylic rubber may be preferably 0.1 to 10% by mass, more preferably 0.5 to 10% by mass, even more preferably 1 to 5% by mass, and particularly preferably 1 to 4% by mass relative to the total mass of the acrylic rubber. If the content ratio of the curesite monomer unit is excessively low, for example, less than 0.1% by mass, the effect by curing an acrylic rubber composition may be small, and a resulting vulcanizate may have insufficient strength. If the content ratio of the curesite monomer unit is excessively high, for example, more than 10% by mass, a vulcanizate of such an acrylic rubber composition may excessively harden, and the vulcanizate may lose rubber elasticity. For a curesite monomer having a carboxyl group, the quantitative determination of the monomer unit is performed by dissolution of a raw rubber of a copolymer in toluene and subsequent neutralization titration of the solution with potassium hydroxide. For a curesite monomer having an epoxy group, the quantitative determination is performed by dissolution of a raw rubber of a copolymer in chloroform and subsequent titration with a perchloric acid-acetic acid solution. For a curesite monomer having an active chlorine group, the quantitative determination is performed by decomposition by oxygen flask combustion method and subsequent titration of the product with silver nitrate.

When only a curesite monomer having a carboxyl group is used as the curesite monomer, the content ratio of the curesite monomer unit is the content ratio of the curesite monomer unit having a carboxyl group. When a curesite monomer having an epoxy group and an additional curesite monomer are used as the curesite monomer, the content ratio is the total content ratio of the curesite monomer having an epoxy group and the additional curesite monomer.

In the acrylic rubber, an additional monomer copolymerizable with the (meth)acrylic acid alkyl ester or the curesite monomer may be copolymerized as long as the object of the present invention is not impaired. Examples of the additional copolymerizable monomer include, but are not necessarily limited to, alkyl vinyl ketones such as vinyl acetate and methyl vinyl ketone; vinyl ethers and allyl ethers such as vinyl ethyl ether and allyl methyl ether; vinyl aromatic compounds such as styrene, α-methylstyrene, chlorostyrene, vinyltoluene, and vinylnaphthalene; vinyl nitriles such as acrylonitrile and methacrylonitrile; and ethylenically unsaturated compounds such as acrylamide, propylene, butadiene, isoprene, pentadiene, vinyl chloride, vinylidene chloride, vinyl fluoride, vinylidene fluoride, ethylene, and vinyl propionate.

When ethylene is copolymerized in the production of the acrylic rubber, the content ratio of the ethylene monomer unit in the acrylic rubber may be preferably 0.1 to 10% by mass, more preferably 0.5 to 5% by mass, and even more preferably 1.0 to 2.9% by mass relative to the total mass of the acrylic rubber. By copolymerization of ethylene within the numerical range, an acrylic rubber having a markedly improved strength can be produced. The content ratio of the monomer unit is quantitatively determined on the basis of a nuclear magnetic resonance spectrum obtained from an acrylic rubber or an acrylic rubber composition.

The acrylic rubber may be produced through copolymerization of the above monomers by a known method including emulsion polymerization, suspension polymerization, solution polymerization, and bulk polymerization. The production method of the acrylic rubber may be appropriately selected by a person skilled in the art.

Examples of the carbon material comprising graphene oxide used in the present invention include, but are not necessarily limited to, graphite, particularly include graphite oxide, graphite flakes (specifically graphite oxide flakes), graphene oxide, and carbon nanotubes. In the present invention, among these carbon materials, graphene oxide is particularly preferably used in order to achieve the effects of the present invention better.

The content ratio of the carbon material in the acrylic rubber composition may be 0.1 to 50 parts by mass, more preferably 0.15 to 45 parts by mass, and even more preferably 0.2 to 40 parts by mass relative to 100 parts by mass of the acrylic rubber. If the content ratio is excessively low, for example, less than 0.1 parts by mass relative to 100 parts by mass of the acrylic rubber, the strength improvement effect by the carbon material may not be exerted. If the content ratio is excessively high, for example, more than 50 parts by mass relative to 100 parts by mass of the acrylic rubber, the tensile properties may deteriorate. The content ratio of the carbon material is determined by thermogravimetry.

The carbon material may have an average particle diameter of, for example, 0.1 µm to 1,000 µm, preferably 0.5 µm to 300 µm, more preferably 1 µm to 200 µm, and even more preferably 5 µm to 100 µm. The average particle diameter may be the average of maximum diameters of any 30 particles. The maximum diameters may be determined under an atomic force microscope.

The carbon material may typically have a thickness of 20 nm or less, for example, 0.1 to 20 nm, preferably 0.2 to 10 nm, and more preferably 0.3 to 8 nm.

The carbon material may be kneaded in a powder state with an acrylic rubber or may be kneaded in a dispersed state in water or another polar solvent with an acrylic rubber. By such kneading, the acrylic rubber composition of the present invention may be produced.

When the carbon material is graphene oxide, the graphene oxide may have an average particle diameter of, for example, 0.1 µm to 1,000 µm, preferably 0.5 µm to 300 µm, more preferably 1 µm to 200 µm, and even more preferably 5 µm to 100 µm. The measurement method of the average particle diameter is the same as above. The graphene oxide may typically have a thickness of 20 nm or less, for example, 0.1 to 20 nm, preferably 0.2 to 10 nm, and more preferably 0.3 to 8 nm. The graphene oxide may have a single layer structure or a multilayer structure and, for example, may include 2 to 5 layers. The functional group that the graphene oxide may have may be, for example, an epoxy group, a carboxyl group, a hydroxyl group, and/or a carbonyl group. The graphene oxide may have one or more functional groups of them. The graphene oxide may be produced by a method known to a person skilled in the art and may be produced, for example, by a modified Hummer's method.

The acrylic rubber composition may further contain a vulcanizing agent or a vulcanization accelerator.

The vulcanizing agent may be any agent commonly used for vulcanization of an acrylic rubber composition. For example, when the curesite monomer is a monomer having a carboxyl group, the vulcanizing agent is preferably a polyamine compound, and a vulcanizing system containing a guanidine compound may be particularly preferably used. When the curesite monomer is a monomer having an epoxy group, the vulcanizing agent may be preferably an imidazole compound.

Examples of the polyamine compound include, but are not necessarily limited to, aromatic polyamine compounds such as 4,4'-bis(4-aminophenoxy)biphenyl, 4,4'-diaminodiphenyl sulfide, 1,3-bis(4-aminophenoxy)-2,2-dimethylpropane, 1,3-bis(4-aminophenoxy)benzene, 1,4-bis(4-aminophenoxy)benzene, 1,4-bis(4-aminophenoxy)pentane, 2,2-bis[4-(4-aminophenoxy)phenyl]propane, 2,2-bis[4-(4-aminophenoxy)phenyl] sulfone, 4,4'-diaminodiphenyl sulfone, bis[4-(3-aminophenoxy)phenyl] sulfone, 2,2-bis[4-(4-aminophenoxy)phenyl]hexafluoropropane, 3,4'-diaminodiphenyl ether, 4,4'-diaminodiphenyl ether, 4,4'-diaminobenzanilide, and bis[4-(4-aminophenoxy)phenyl] sulfone; and aliphatic polyamine compounds such as hexamethylenediamine, hexamethylenediamine carbamate, N,N'-dicinnamylidene-1,6-hexanediamine, diethylenetriamine, triethylenetetramine, and tetraethylenepentamine.

Examples of the guanidine compound include, but are not necessarily limited to, guanidine, tetramethylguanidine, dibutylguanidine, diphenylguanidine, and di-o-tolylguanidine.

Examples of the imidazole compound include, but are not necessarily limited to, 1-methylimidazole, 1,2-dimethylimidazole, 1-methyl-2-ethylimidazole, 1-benzyl-2-methylimidazole, 1-benzyl-2-ethylimidazole, 1-benzyl-2-ethyl-5-methylimidazole, 1-benzyl-2-phenylimidazole, 1-benzyl-2-phenylimidazole trimellitic acid salt, 1-aminoethylimidazole, 1-aminoethyl-2-methylimidazole, 1-aminoethyl-2-ethylimidazole, 1-cyanoethyl-2-methylimidazole, 1-cyanoethyl-2-phenylimidazole, 1-cyanoethyl-2-ethyl-4-methylimidazole, 1-cyanoethyl-2-undecylimidazole, 1-cyanoethyl-2-methylimidazole trimellitate, 1-cyanoethyl-2-phenylimidazole trimellitate, 1-cyanoethyl-2-ethyl-4-methylimidazole trimellitate, 1-cyanoethyl-2-undecyl-imidazole trimellitate, 2,4-diamino-6-[2'-methylimidazolyl-(1)']ethyl-s-triazine/isocyanuric acid adduct, 1-cyanoethyl-2-phenyl-4,5-di-(cyanoethoxymethyl)imidazole, N-(2-methylimidazolyl-1-ethyl)urea, N,N'-bis-(2-methylimidazolyl-1-ethyl)urea, 1-(cyanoethylaminoethyl)-2-methylimidazole, N,N'-[2-methylimidazolyl-(1)-ethyl]-adipoyl diamide, N,N'-[2-methylimidazolyl-(1)-ethyl]-dodecanedioyl diamide, N,N'-[2-methylimidazolyl-(1)-ethyl]-eicosanedioyl diamide, 2,4-diamino-6-[2'-methylimidazolyl-(1)']-ethyl-s-triazine, 2,4-diamino-6-[2'-undecylimidazolyl-(1)']-ethyl-s-triazine, 1-dodecyl-2-methyl-3-benzylimidazolium chloride, and 1,3-dibenzyl-2-methylimidazolium chloride.

The content of the vulcanizing agent is not limited to particular values and is preferably 0.1 to 10 parts by mass and more preferably 0.3 to 5 parts by mass relative to 100 parts by mass of the acrylic rubber. When the content is within the range, necessary and sufficient vulcanization treatment can be performed.

The vulcanization accelerator is added in order to control the vulcanization rate. Specific examples of the vulcanization accelerator include, but are not necessarily limited to, curing agents for epoxy resins, such as pyrolytic ammonium salts, organic acids, acid anhydrides, amines, sulfur, and sulfur compounds. The vulcanization accelerator may be added at such an amount as not to impair characteristics of a vulcanizate produced from the acrylic rubber composition in the present invention.

The vulcanizing agent, the vulcanization accelerator, and the like may be kneaded with the acrylic rubber composition of the present invention at a temperature not higher than a vulcanization temperature. The acrylic rubber composition of the present invention may be molded into various intended shapes and then be vulcanized into a vulcanizate, or may be vulcanized and then be molded into various intended shapes. The vulcanization temperature may be appropriately set depending on mixing ratios of components in the acrylic rubber composition or a type of the vulcanizing agent, and is typically 100 to 200°C and preferably 130 to 180°C. The time for vulcanization is 1 to 10 hours and preferably 2 to 6 hours.

Apparatuses for kneading, molding, or vulcanizing the acrylic rubber composition and apparatuses for kneading or molding a vulcanizate of the acrylic rubber composition may be those commonly used in the rubber industry.

The acrylic rubber composition may contain a filler, a reinforcing agent, a plasticizer, a lubricant, an age inhibitor, a stabilizer, a silane coupling agent, and the like depending on intended practical use.

As the filler or the reinforcing agent, fillers or reinforcing agents used for common rubber applications may be added, and examples include fillers or reinforcing agents, such as carbon blacks, silicas, talcs, and calcium carbonates. The total content of such additives is preferably 20 to 100 parts by mass relative to 100 parts by mass of the acrylic rubber composition.

As the plasticizer, plasticizers used for common rubber applications may be added, and examples include ester plasticizers, polyoxyethylene ether plasticizers, and trimellitate plasticizers. The content of the plasticizer is preferably about 50 parts by mass or less relative to 100 parts by mass of the acrylic rubber composition.

The acrylic rubber composition of the present invention and the vulcanizate thereof are suitably used specifically as rubber hoses, sealing parts such as gaskets and packings, and rubber vibration isolators. In other words, the present invention provides a rubber hose, a sealing part, or a rubber vibration isolator comprising the vulcanizate of the present invention. The rubber hose, the sealing part, and the rubber vibration isolator may be composed of only the acrylic rubber composition of the present invention or only the vulcanizate thereof, or may be a combination with other parts.

Examples of the rubber hose include transmission oil cooler hoses, engine oil cooler hoses, air duct hoses, turbo intercooler hoses, hot air hoses, radiator hoses, power steering hoses, fuel system hoses, and drain system hoses in automobiles, construction machinery, or hydraulic machines.

As the structure of the rubber hose, reinforcing yarns or wires may be provided inside a hose or on the outermost layer of a rubber hose as commonly performed.

Examples of the sealing part include engine head cover gaskets, oil pan gaskets, oil seals, lip seal packings, O-rings, transmission seal gaskets, crank shafts, cam shaft seal gaskets, valve stems, power steering seal belt cover seals, boot materials for constant velocity joints, and rack and pinion boot materials.

Examples of the rubber vibration isolator include damper pulleys, center support cushions, and suspension bushes.

### Examples

The present invention will next be described in further detail with reference to examples, but the invention is not intended to be limited by the examples.

Acrylic rubbers A and B were produced in the conditions shown below.

### <Acrylic rubber A>

In a pressure-resistant reaction container having an internal volume of 40 liters, 5.6 Kg of ethyl acrylate, 5.6 Kg of n-butyl acrylate, 560 g of monobutyl maleate, 17 Kg of 4% by mass aqueous solution of partially saponified polyvinyl alcohol, and 22 g of sodium acetate were placed, and the whole was thoroughly stirred with a stirrer, giving a homogeneous suspension. The air in the upper part of the container was replaced with nitrogen, then ethylene was injected under pressure into the upper part of the container, and the pressure was adjusted at 3.5 MPa. Under stirring, the temperature in the container was maintained at 55°C, and an aqueous t-butyl hydroperoxide solution (0.25% by mass, 2 liters) was separately injected under pressure from an inlet to start polymerization. The temperature in the container during the reaction was maintained at 55°C, and the reaction was completed after 6 hours. To the resulting polymerization liquid, an aqueous sodium borate solution (3.5% by mass, 7 liters) was added to solidify the polymer, and the polymer was dehydrated and dried to give an acrylic rubber A.

As the copolymer composition of the acrylic rubber A, the ethylene monomer unit was 2.0% by mass, the monobutyl maleate monomer unit was 3.5% by mass, the ethyl acrylate monomer unit was 47.5% by mass, and the n-butyl acrylate monomer unit was 47.0% by mass. The quantitative determination of the monobutyl maleate monomer unit was performed by dissolution of a raw rubber of the copolymer in toluene and subsequent neutralization titration with potassium hydroxide. The other monomer units were quantitatively determined from nuclear magnetic resonance spectra of the respective components.

### <Acrylic rubber B>

The same procedure as for the acrylic rubber A was performed except that 150 g of glycidyl methacrylate was used in place of monobutyl maleate to start polymerization, giving an acrylic rubber B.

As the copolymer composition of the acrylic rubber B, the ethylene monomer unit was 2.0% by mass, the glycidyl methacrylate monomer unit was 3.5% by mass, the ethyl acrylate monomer unit was 47.5% by mass, and the n-butyl acrylate monomer unit was 47.0% by mass. The quantitative determination of the glycidyl methacrylate monomer was performed by dissolution of a raw rubber of the copolymer in chloroform and subsequent titration with a perchloric acid-acetic acid solution. The other copolymer composition was quantitatively determined from nuclear magnetic resonance spectra of each component.

### <Preparation of acrylic rubber composition>

The acrylic rubber A or B produced by the above method was kneaded with a HAAKE mixer and a 6-inch open roll in accordance with a formulation in Table 1, and was extruded into a sheet having a thickness of 2.4 mm. The sheet was subjected to press vulcanization at 170°C for 50 minutes with a press vulcanizer.

Reagents described in Table 1 are as shown below.
- Stearic acid: Lunac S-90 manufactured by Kao Corporation
- Stearylamine: Farmin 80 manufactured by Kao Corporation
- Liquid paraffin: HICALL K-230 manufactured by Kaneda Co., Ltd.
- Age inhibitor: NAUGARD 445 manufactured by Uniroyal Chemical Company Ltd. (4,4'-bis(α, α-dimethylbenzyl)diphenylamine)
- 2,2-bis [4-(4-aminophenoxy)phenyl]propane: manufactured by Wakayama Seika Kogyo Co., Ltd.
- XLA-60: vulcanization accelerator manufactured by Lanxess
- Trimethylthiourea: manufactured by Ouchi Shinko Chemical Industrial Co., Ltd.
- 1-Benzyl-2-methylimidazole: manufactured by Shikoku Chemicals Corporation
- Octadecyltrimethylammonium bromide: manufactured by Toho Chemical Industry Co., Ltd.
- Graphene: Graphene 3777 manufactured by Asbury Carbons Inc.

The graphene oxide in Table 1 was prepared by oxidation of Graphene 3777 manufactured by Asbury Carbons Inc. through a modified Hummer's method. In other words, the graphene oxide was prepared in accordance with the following procedure.
1. First, 1 g of graphene and 0.5 g of sodium nitrate were mixed, then 23 mL of concentrated sulfuric acid was added, and the whole was stirred for one hour to give a mixture 1.
2. To the mixture 1, 3 g of potassium permanganate was slowly added so that the temperature of the mixture did not exceed 20°C, giving a mixture 2.
3. The mixture 2 was stirred at 35°C for 12 hours, and then 500 mL of water was added while the mixture was vigorously stirred, giving a suspension.
4. To the suspension, 5 mL of 30% aqueous hydrogen peroxide was added to completely consume the potassium permanganate.
5. The suspension after the treatment in step 4 was washed with hydrochloric acid and water and was filtered, and the product was dried to give graphene oxide.

### <Test method of physical properties>

The tensile strength, the elongation at break, and the heat resistance of the produced acrylic rubber compositions were evaluated in the following conditions.
(1) Tensile strength/elongation at break
   Measurement was performed in accordance with ASTM D 412-98.
(2) Heat resistance test

An apparatus for thermogravimetry was used to heat about 10 mg of a sample to 600°C at a temperature increase rate of 20°C/min under a nitrogen atmosphere (nitrogen flow rate: 35 mL/min), and a temperature at which the sample weight decreased by 5% was determined as the decomposition temperature. The measurement results of Examples and Comparative Example are shown in Table 1.

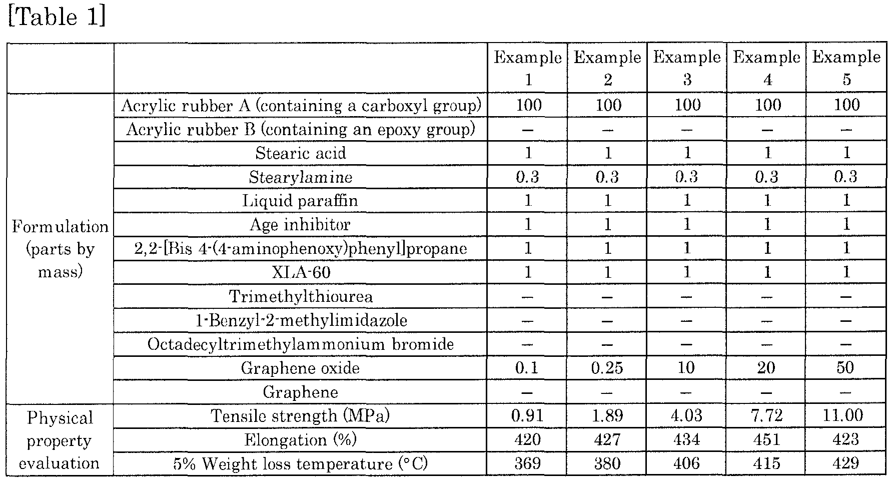

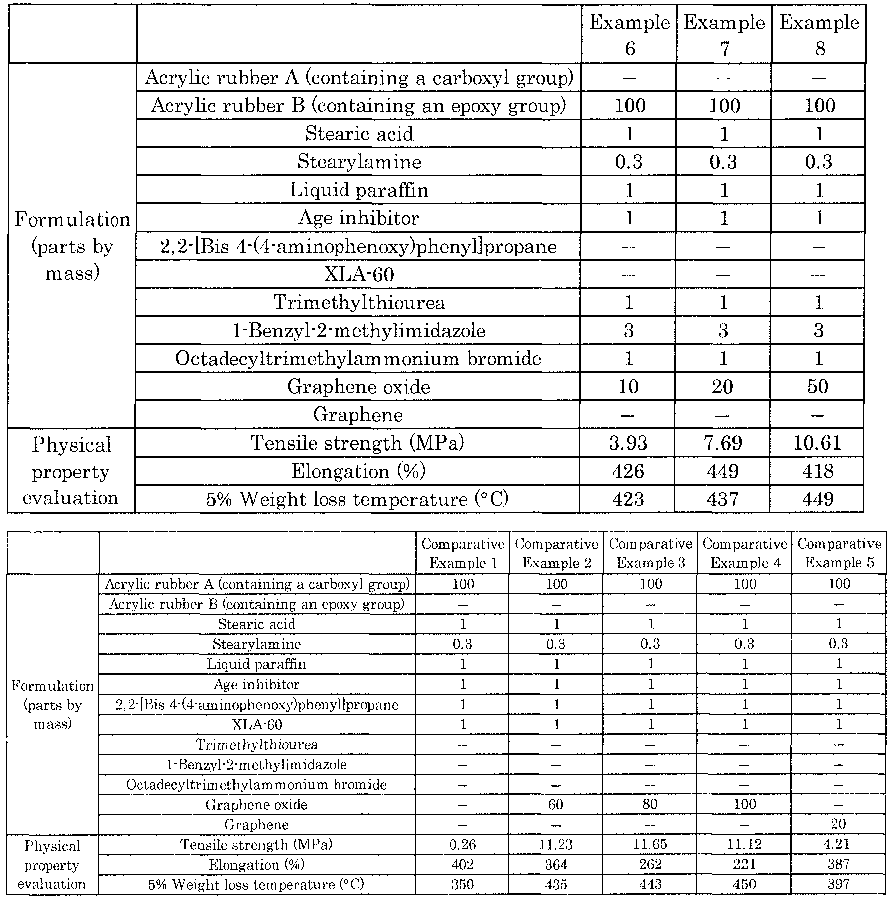

As shown in Table 1, the acrylic rubber compositions containing graphene oxide in Examples 1 to 8 had excellent mechanical strength particularly in tensile properties and heat resistance as compared with the acrylic rubber composition free from graphene oxide in Comparative Example 1. The acrylic rubber compositions containing graphene oxide at contents of more than 50 parts by mass in Comparative Examples 2 to 4 had poor evaluation results of tensile properties particularly in elongation as compared with Examples 1 to 8. The acrylic rubber composition containing graphene in place of graphene oxide in Comparative Example 5 had poor evaluation results of tensile properties particularly in elongation as compared with Examples 1 to 8. From these results, the acrylic rubber composition of the present invention has excellent rubber physical properties in tensile properties and heat resistance.

## Claims

1. An acrylic rubber composition comprising 0.1 to 50 parts by mass of a carbon material comprising graphene oxide, relative to 100 parts by mass of an acrylic rubber,
wherein the acrylic rubber includes at least one functional group selected from an epoxy group, a carboxyl group, and an active chlorine group.

2. The acrylic rubber composition according to claim 1, wherein a content ratio of a monomer unit having the functional group is 0.1 to 10% by mass relative to a total mass of the acrylic rubber.

3. The acrylic rubber composition according to any one of claims 1 or 2, wherein the acrylic rubber comprises an ethylene monomer unit.

4. The acrylic rubber composition according to claim 3, wherein a content ratio of the ethylene monomer unit is 0.1 to 10% by mass relative to a total mass of the acrylic rubber.

5. The acrylic rubber composition according to any one of claims 1 to 4, wherein the carbon material is graphene oxide.

6. A vulcanizate of the acrylic rubber composition according to any one of claims 1 to 5.

7. A rubber hose comprising the vulcanizate according to claim 6.

8. A sealing part comprising the vulcanizate according to claim 6.

9. A rubber vibration isolator comprising the vulcanizate according to claim 6.

## Patentansprüche

1. Acrylgummi-Zusammensetzung, die 0,1 bis 50 Massenteile eines Kohlenstoffmaterials, das Graphenoxid umfasst, in Bezug auf 100 Massenteile eines Acrylgummis umfasst,
wobei der Acrylgummi mindestens eine funktionelle Gruppe einschließt, die aus einer Epoxygruppe, einer Carboxylgruppe und einer aktiven Chlorgruppe ausgewählt ist.

2. Acrylgummi-Zusammensetzung nach Anspruch 1, wobei ein Gehaltverhältnis einer Monomereinheit, die die funktionelle Gruppe aufweist, 0,1 bis 10 Masse-% in Bezug auf eine Gesamtmasse des Acrylgummis beträgt.

3. Acrylgummi-Zusammensetzung nach einem der Ansprüche 1 oder 2, wobei der Acrylgummi eine Ethylen-Monomereinheit umfasst.

4. Acrylgummi-Zusammensetzung nach Anspruch 3, wobei ein Gehaltverhältnis der Ethylen-Monomereinheit 0,1 bis 10 Masse-% in Bezug auf eine Gesamtmasse des Acrylgummis beträgt.

5. Acrylgummi-Zusammensetzung nach einem der Ansprüche 1 bis 4, wobei das Kohlenstoffmaterial Graphenoxid ist.

6. Vulkanisat der Acrylgummi-Zusammensetzung nach einem der Ansprüche 1 bis 5.

7. Gummischlauch, der das Vulkanisat nach Anspruch 6 umfasst.

8. Dichtungsteil, das das Vulkanisat nach Anspruch 6 umfasst.

9. Gummischwingungsisolator, der das Vulkanisat nach Anspruch 6 umfasst.

## Revendications

1. Composition de caoutchouc acrylique comprenant de 0,1 à 50 parties en masse d'un matériau carboné comprenant de l'oxyde de graphène, pour 100 parties en masse d'un caoutchouc acrylique,
dans laquelle le caoutchouc acrylique comporte au moins un groupement fonctionnel choisi parmi un groupement époxy, un groupement carboxyle, et un groupement de chlore actif.

2. Composition de caoutchouc acrylique selon la revendication 1, dans laquelle un rapport de teneur d'un motif de monomère ayant le groupement fonctionnel va de 0,1 à 10% en masse par rapport à une masse totale du caoutchouc acrylique.

3. Composition de caoutchouc acrylique selon l'une quelconque des revendications 1 ou 2, dans laquelle le caoutchouc acrylique comprend un motif de monomère d'éthylène.

4. Composition de caoutchouc acrylique selon la revendication 3, dans laquelle un rapport de teneur du motif de monomère d'éthylène va de 0,1 à 10% en masse par rapport à une masse totale du caoutchouc acrylique.

5. Composition de caoutchouc acrylique selon l'une quelconque des revendications 1 à 4, dans laquelle le matériau carboné est l'oxyde de graphène.

6. Produit de vulcanisation de la composition de caoutchouc acrylique selon l'une quelconque des revendications 1 à 5.

7. Tuyau en caoutchouc comprenant le produit de vulcanisation selon la revendication 6.

8. Elément d'étanchéité comprenant le produit de vulcanisation selon la revendication 6.

9. Isolateur anti-vibrations en caoutchouc comprenant le produit de vulcanisation selon la revendication 6.
